# EUROPEAN PATENT SPECIFICATION

(11) **EP 0 957 136 B1**
(45) Date of publication and mention of the grant of the patent: **05.12.2001**
(21) Application number: 99108579.6
(22) Date of filing: 06.05.1999
(51) Int. Cl.: C09B 67/22, C09D 11/02

(54) **Additive for a pigment containing disazo compounds, and pigment compositions containing it**
Pigmentzusatzstoff der Disazoverbindungen enthält und diesen enthaltende Pigmentzusammensetzungen
Additif pour pigment comprenant des composés disazoiques et compositions pigmentaires le contenant

(30) Priority: 11.05.1998 JP 12733598
(43) Date of publication of application: 17.11.1999
(73) Proprietor: DAINIPPON INK AND CHEMICALS, INC., Itabashi-ku Tokyo (JP)
(72) Inventor: Ando, Hirohito, Namekata-gun, Ibaraki-ken (JP); Aoki, Shigeto, Kashima-gun, Ibaraki-ken (JP); Tomioka, Sadayuki, Kashima-shi, Ibaraki-ken (JP); Kobayashi, Nagatoshi, Kashima-shi, Ibaraki-ken (JP)
(74) Representative: Kraus, Walter, Dr.

(56) References cited:
- EP-A- 0 263 951
- EP-A- 0 529 849
- EP-A- 0 823 459
- FR-A- 2 084 544
- JP-A- 4 275 373
- JP-A- 63 178 169
- US-A- 4 648 907
- PATENT ABSTRACTS OF JAPAN vol. 012, no. 455 (C-548), 29 November 1988 (1988-11-29) & JP 63 178169 A (DAINIPPON INK & CHEM INC), 22 July 1988 (1988-07-22)
- PATENT ABSTRACTS OF JAPAN vol. 017, no. 073 (C-1026), 15 February 1993 (1993-02-15) & JP 04 275373 A (TOYO INK MFG CO LTD), 30 September 1992 (1992-09-30)

## Description

### TECHNICAL FIELD

The present invention relates to an additive for a disazo pigment, comprising a disazo compound mixture; and a pigment composition. More specifically, the present invention relates to (1) an additive for a pigment, comprising a disazo compound mixture, that is capable of producing a printing ink with a superior flow ability; and (2) a pigment composition capable of producing printing ink with a superior flow ability.

This application is based on Patent Application No. Hei 10-127335, filed in Japan, the content of which is incorporated herein by reference.

### BACKGROUND ART

As examples of conventional methods for improving transparency and flow ability of printing inks containing disazo pigments, Japanese Patent Application, Second Publication No. Sho 45-11026 discloses a method for mixing sulfonic acid compounds into disazo pigments; Japanese Patent Application, Second Publication No. Sho. 55-49087 discloses a method for using a disazo pigment formed by using a mixture of non-polar coupling components and polar coupling components having carboxyl groups and/or sulfo groups as coupling components; and Japanese Patent Application, First Publication No. Sho 63-72762 and Japanese Patent Application, First Publication No. Sho 63-178169 respectively disclose a method of using a disazo pigment composition containing asymmetric disazo compounds which are formed from polar coupling components and non-polar coupling components, respectively. Among these disclosures, it is known that a disazo pigment composition disclosed in Japanese Patent Application, First Publication No. Sho 63-178169 is more effective in improving the flow ability of printing inks.

In addition, Japanese Patent Application, First Publication, No. Hei 4-275373 discloses a rosin surface-treated pigment, wherein a disazo compound mixture is formed by means of reacting 2 to 40 mol% of acetoacetic acid m-xylidide, 97.9 to 60 mol% of acetoacetic acid o-toluidide, and 0.1 to 10 mol% of 2-acetoacetylamino benzoic acid, as the coupler components, with a tetrazo compound of 3,3'-dichlorobenzidine, as the tetrazo component.

In the printing industry, from the viewpoint of increased productivity, the printing speed is undergoing remarkable improvements. Currently, a printing machine capable of printing at a speed of 4 meter per second enjoys widespread use as the industry standard; however, a printing machine capable of printing 15 meter per second has been already developed. In accordance with this increasing printing speed, flow abilities greater than those obtained to date are highly desired for the printing inks.

However, there exist limits with regard to the conventional technology for improving the flow ability of the printing ink obtained using a disazo pigment composition disclosed in Japanese Patent Application, First Publication No. Sho. 63-178169.

In addition, in the same manner, the flow ability of the printing ink, obtained using a rosin-treated disazo pigment disclosed in Japanese Patent Application, First Publication No. Hei 4-275373, are likewise inadequate.

### DISCLOSURE OF INVENTION

The objects of the present invention relate to (1) a composition, comprising a disazo compound mixture, that is capable of producing a printing ink with a superior flow ability; (2) a pigment composition capable of producing a printing ink with a superior flow ability; and (3) a printing ink with a superior flow ability.

The inventors of the present invention have achieved the present invention, as a result of intense research efforts for developing a printing ink with a superior flow ability. As a result, they have developed (1) an additive for a pigment, comprising a disazo compound mixture, that is capable of producing a printing ink with a superior flow ability; and (2) a pigment composition capable of producing a printing ink with a superior flow ability.

In other words, the present invention provides the following.

An additive for a disazo pigment containing at least the following disazo compounds respectively represented by the formulae (I), (IV), and (V): 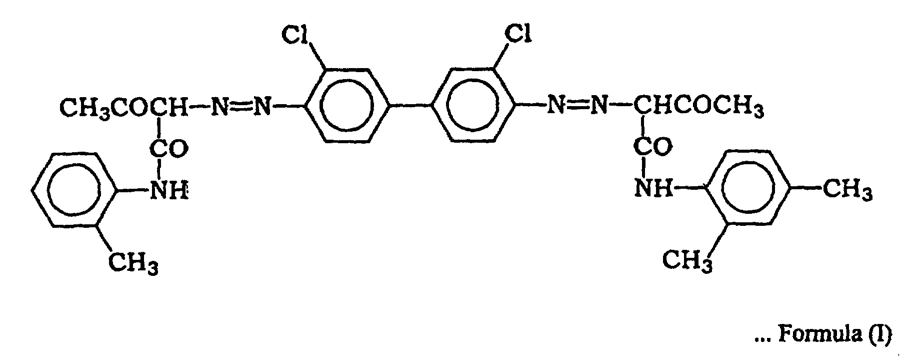 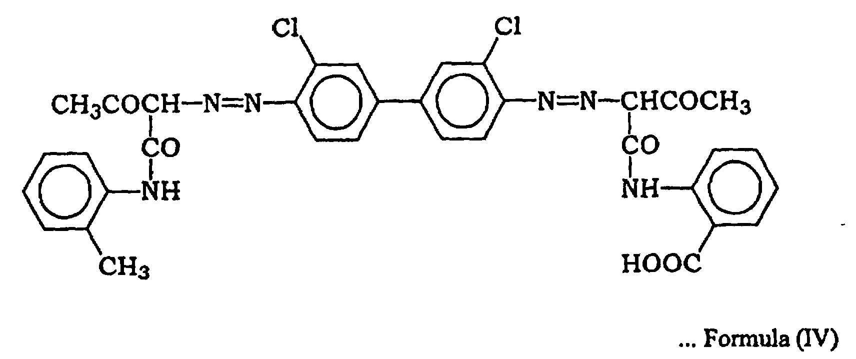 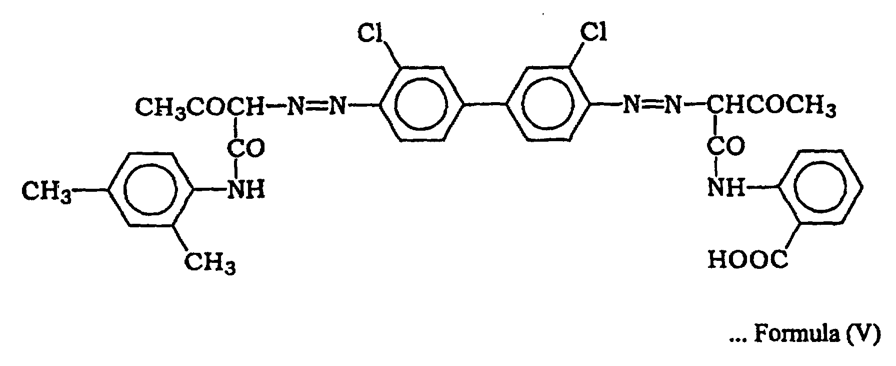
1. A composition comprising a disazo compound mixture, which is formed by means of reacting 39 to 47 mol% of acetoacetic acid m-xylidide, 11 to 19 mol% of acetoacetic acid o-toluidide, and 38 to 46 mol% of 2-acetoacetylamino benzoic acid, as coupler components, with a tetrazo compound of 3,3'-dichlorobenzidine, as a tetrazo component.
2. A pigment composition formed by means of adding a disazo pigment to a composition comprising a disazo compound mixture, wherein the composition comprising the disazo compound mixture is formed by means of reacting 39 to 47 mol% of acetoacetic acid m-xylidide, 11 to 19 mol% of acetoacetic acid o-toluidide, and 38 to 46 mol% of 2-acetoacetylamino benzoic acid, as coupler components, with a tetrazo compound of 3,3'-dichlorobenzidine, as a tetrazo component.
3. A pigment composition according to 2, described above, wherein said disazo pigment is treated with rosin.
4. A pigment composition according to 2 or 3, described above, wherein said disazo pigment is at least one disazo pigment selected from among the group consisting of C. I. Pigment Yellow 13, C. I. Pigment Yellow 14, and a disazo pigment represented by the following Formula (I). 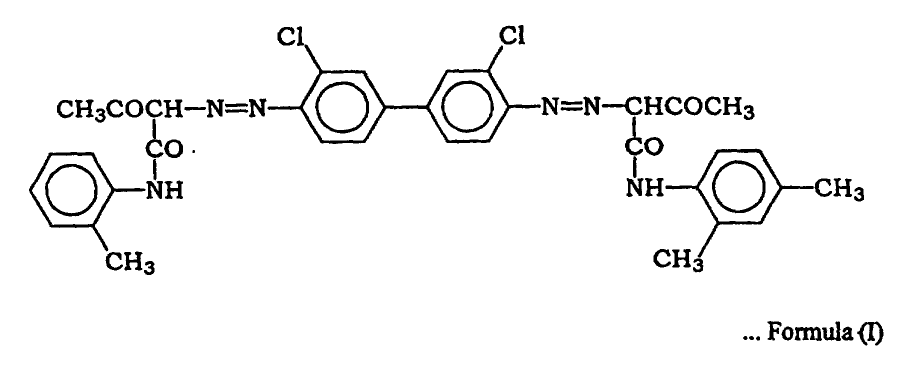
5. A pigment composition according to 2 or 3, described above, wherein said disazo pigment is formed by reacting acetoacetic acid m-xylidide, as an essential component, with a tetrazo compound of 3,3'-dichlorobenzidine, as a tetrazo component.
6. A pigment composition according to 5, described above, wherein said coupler components comprise 10 to 90 mol% of acetoacetic acid m-xylidide, and 10 to 90 mol% of acetoacetic acid o-toluidide.
7. A pigment composition according to 5, described above, wherein said coupler components comprise 60 to 80 mol% of acetoacetic acid m-xylidide, and 20 to 40 mol% of acetoacetic acid o-toluidide.
8. A printing ink, containing a pigment composition according to 2, 3, 4, 5, 6, or 7 described above.

### BEST MODE FOR CARRYING OUT THE INVENTION

The additive for a disazo pigment according to the present invention contains at least the aforementioned compounds represented by Formulae (I), (IV), and (V). These three components, which respectively comprise asymmetric chemical structures, are essential components contributing to an improvement of the flow ability of a printing ink containing the pigment.

The composition comprising a disazo compound mixture according to the present invention, can be used as an additive for a disazo pigment, and the aforementioned three components consisting of, for example, acetoacetic acid m-xylidide, acetoacetic acid o-toluidide, and 2-acetoacetylamino benzoic acid can be used as coupler components. In this manner, the composition is able contain the compounds represented by the above Formulae (I), (IV), and (V). Moreover, the mixing ratio of the three components is not particularly limited, however, a ratio of 39 - 47 mol% of acetoacetic acid m-xylidide to 11 - 19 mol% of acetoacetic acid o-toluidide to 38 - 46 mol% of 2-acetoacetylamino benzoic acid is preferred.

On the other hand, a disazo compound mixture, which is used to adjust the disazo pigment composition disclosed in Japanese Patent Application, First Publication, No. Sho. 63-178169, is characterized in comprising two components consisting of acetoacetic acid m-xylidide and 2-acetoacetylamino benzoic acid, as coupler components, or alternatively, acetoacetic acid o-toluidide and 2-acetoacetylamino benzoic acid, as coupler components. Thus, even if the aforementioned components are synthesized independently, and then mixed together to prepare an additive for a disazo pigment, a compound represented by Formula (I) is not contained therein. On the contrary, the additive for a pigment according to the present invention contains a compound represented by the above Formula (I).

The composition, comprising a disazo compound mixture according to the present invention, possesses fine crystal particles (grains) with little aggregative property between these crystal particles. Thus, it is easy to disperse the composition at the primary particle level, in the process of producing a lithographic ink. Accordingly, the composition comprising a disazo compound mixture can be adsorbed uniformly and firmly to the surface of a disazo pigment, thereby providing the resultant printing ink with a superior flow ability, in response to a high-speed printing machine.

On the other hand, the disazo compound mixture, which is used to adjust the disazo pigment composition, disclosed in Japanese Patent Application, First Publication, No. Sho. 63-178169, possesses large crystal particles, with a large amount of aggregative property between these crystal particles. Thus, it is difficult to disperse this disazo compound mixture at the primary particle level, in the process of producing a lithographic ink. Accordingly, the disazo compound mixture cannot be adsorbed uniformly and firmly to the surface of a disazo pigment, and thus is not capable of producing a printing ink with a superior flow ability, in response to a high-speed printing machine.

The additive for a disazo pigment according to the present invention can be obtained by means of reacting acetoacetic acid m-xylidide, acetoacetic acid o-toluidide, and 2-acetoacetylamino benzoic acid, as coupler components, with a tetrazo component, wherein a greater amount of the disazo compound represented by the aforementioned formula (V) is contained than the disazo compound represented by the aforementioned formula (IV). Concretely, said additive can be formed by means of reacting 39 to 47 mol% of acetoacetic acid m-xylidide, 11 to 19 mol% of acetoacetic acid o-toluidide, 38 to 46 mol% of 2-acetoacetylamino benzoic acid, as coupler components, with a tetrazo compound of 3,3'-dichlorobenzidine, as a tetrazo component. The composition comprising the disazo compound mixture can be manufactured, for example, according to the following manufacturing method.
(1) A tetrazo compound is first prepared according to a conventional method using 3,3'-dichlorobenzidine (referred to as "tetrazo component").
(2) An aqueous solution or dispersion comprising 38 to 46 mol% of 2-acetoacetylamino benzoic acid is then added to the tetrazo component (referred to as "tetrazo reactant").
(3) A mixed coupler component comprising 39 to 47 mol% of acetoacetic acid m-xylidide and 11 to 19 mol% of acetoacetic acid o-toluidide is then prepared (referred to as "mixed coupler component").
(4) The coupling reaction between the tetrazo reactant and the mixed coupler component is then carried out in a conventional manner under an acidic environment of acetic acid without particular limitations. The conditions at this time include a pH of 3 to 6, a temperature of 5 to 30°C, and a time of period of 30 to 180 minutes (referred to as "reaction slurry").
(5) The reaction slurry is subsequently stirred while heating at 70 to 110°C for 0.5 to 4 hours, preferably at 90°C for 2 hours.
(6) The resultant slurry is then filtered, washed with water, dried, and ground.

In the aforementioned (1) to (6), the term "mol%" indicates the proportional content of the 3-type coupler component formed from 2-acetoacetylamino benzoic acid, acetoacetic acid m-xylidide, and acetoacetic acid o-toluidide.

The disazo compound mixture obtained in this manner is a mixture comprising six disazo compounds possessing the respective chemical structures shown below.

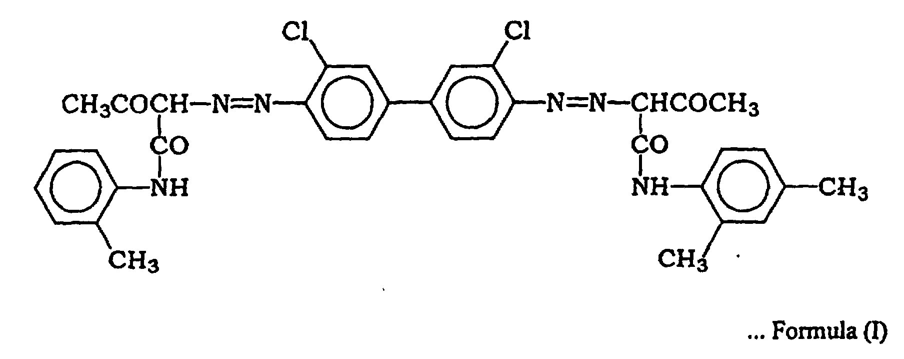

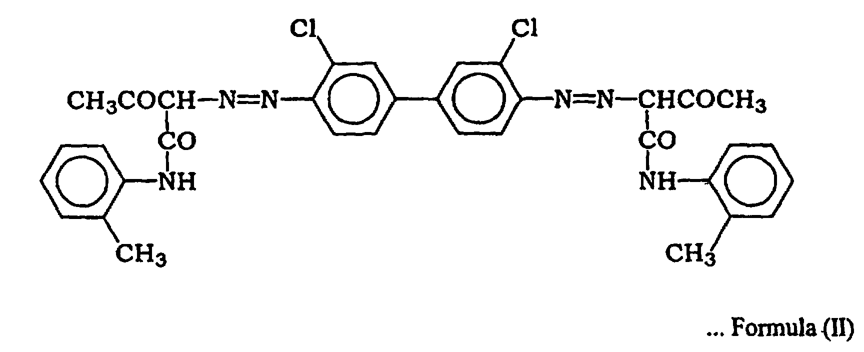

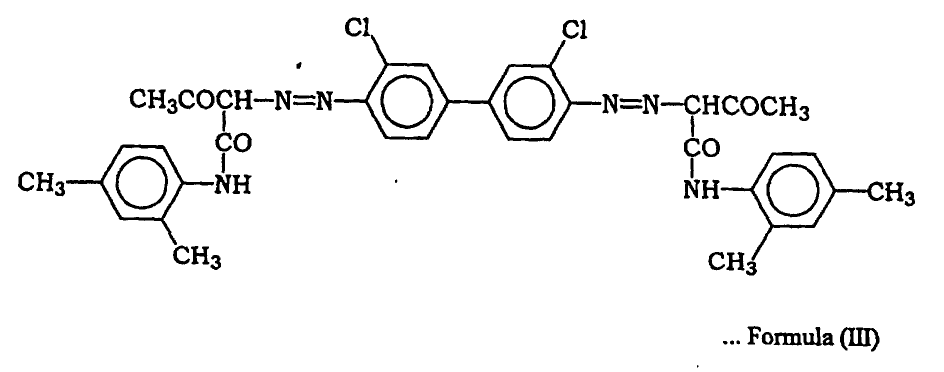

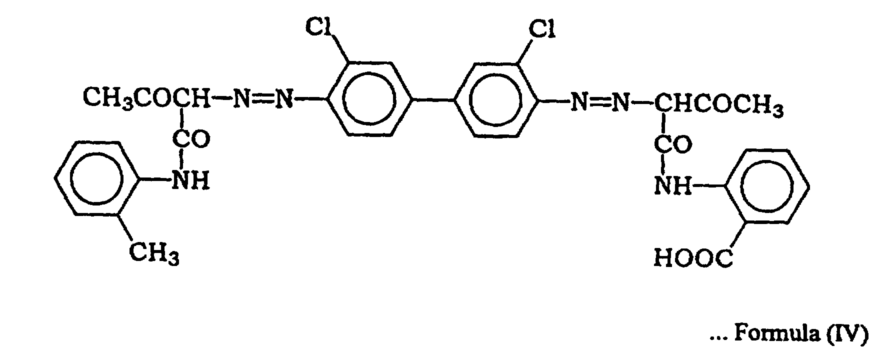

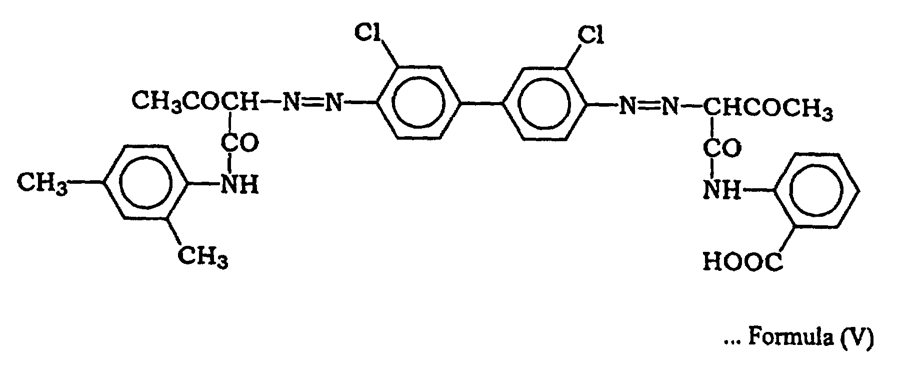

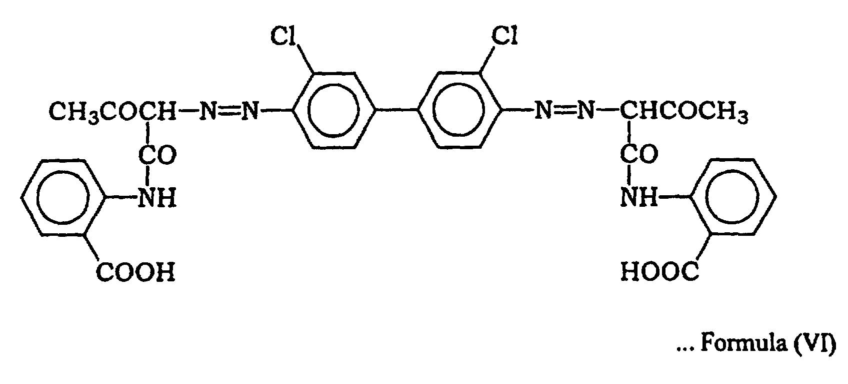

The six-type disazo compound may also be obtained by means of mixing the aforementioned disazo compounds separately; however, the crystal particles of a mixture comprising six types of disazo compounds formed by means of reacting 39 to 47 mol% of acetoacetic acid m-xylidide, 11 to 19 mol% of acetoacetic acid o-toluidide, and 38 to 46 mol% of 2-acetoacetylamino benzoic acid, as the coupler components, with a tetrazo compound of 3,3'-dichlorobenzidine, as the tetrazo component, are finer and possess a low aggregative property between particles, such that at the time of manufacturing the lithographic ink, it is possible to easily disperse the mixture, all the way down to the level of the primary particles.

This process is preferable, since the formation of primary particles from the mixture comprising six types of disazo compounds produces the effects of facilitating a sharp particle size distribution of the crystal particles, as well as a low aggregative property between crystal particles. In contrast, the crystal primary particles obtained from only a single type of disazo compound results in a different grain diameter for each of the six types of disazo compounds, such that the aforementioned superior effects are not obtained.

Rather than using the composition formed from a mixture, comprising six types of disazo compounds formed by means of reacting 39 to 47 mol% of acetoacetic acid m-xylidide, 11 to 19 mol% of acetoacetic acid o-toluidide, and 38 to 46 mol% of 2-acetoacetylamino benzoic acid, as the coupler components, with a tetrazo compound of 3,3'-dichlorobenzidine, as the tetrazo component, as the pigment composition itself, it is preferable to use the aforementioned composition as a pigment composition after adding a separately prepared disazo pigment.

It is preferable that the aforementioned mixture of the six types of disazo compounds is not treated with a rosin.

Any conventionally used compound may be employed as the disazo pigment used in the present invention.

Concrete examples of the aforementioned include (1) C. I. Pigment Yellow 13, 14, 55 and 12; (2) a mixture of two or more types of the pigments described in (1); (3) a mixed crystal of a disazo pigment disclosed in Japanese Patent Application, Second Publication No. Sho 48-26373, e.g., a mixed crystal of a disazo pigment formed by means of reacting a mixed coupler component, comprising acetoacetic acid m-xylidide and acetoacetic acid o-toluidide, with a tetrazo compound of 3,3'-dichlorobenzidine, as the coupler components; and (4) a disazo pigment formed from a disazo compound represented by the aforementioned Formula (I).

As the disazo pigment for use in the present invention, from the major perspective of improving the flow ability, it is preferable to have at least one disazo pigment selected from the group consisting of C.I. Pigment Yellow 13, C.I. Pigment Yellow 14, and a disazo compound represented by the aforementioned Formula (I). This disazo pigment may be formed from a mixture of two or more types of disazo pigments each respectively comprising a single type of disazo compound; however, mixed crystals of the aforementioned are particularly preferred.

The disazo pigment described concretely above is a disazo pigment formed by means of reacting at least one type of coupler component selected from the group consisting of acetoacetic acid m-xylidide, acetoacetic acid o-toluidide, acetoacetic acid p-toluidide, and acetoacetic acid anilide, with a tetrazo component comprising a tetrazo compound of 3,3'-dichlorobenzidine.

Moreover, the disazo pigment formed by means of reacting a mixed coupler component comprising acetoacetic acid m-xylidide and acetoacetic acid o-toluidide, with a tetrazo component, comprising a tetrazo compound of 3,3'-dichlorobenzidine, is a disazo pigment containing all of the aforementioned disazo compounds of C.I. Pigment Yellow 13, C.I. Pigment Yellow 14, and a disazo compound represented by the aforementioned Formula (I).

Another preferred disazo pigment is one that includes a disazo compound represented by the aforementioned Formula (III), as an essential component. This is a disazo pigment formed by means of reacting acetoacetic acid m-xylidide, as an essential coupler component, with the a tetrazo compound of 3,3'-dichlorobenzidine, as the tetrazo component.

From the standpoint of significantly improving the flow ability, and moreover, when used in a lithographic ink, achieving a high transparency and producing a clear printed material, a preferred composition includes a composition that is formed by means of reacting a mixed coupler component, comprising 10 to 90 mol% of acetoacetic acid m-xylidide and 10 to 90 mol% of acetoacetic acid o-toluidide, as the coupler components, as this results in maximal improvement in the flow ability; while a composition that is formed by means of reacting a mixed coupler component, comprising 60 to 80 mol% of acetoacetic acid m-xylidide and 20 to 40 mol% of acetoacetic acid o-toluidide, as the coupler components, is particularly preferred, as this results in the highest transparency and clearest printed material when used in a lithographic ink.

The disazo pigment for use in the present invention can be manufactured, for example, according to the following manufacturing method.
(1) A tetrazo compound is first prepared according to a conventional method using 3,3'-dichlorobenzidine (referred to as "tetrazo component").
(2) A coupler component selected from the group consisting of acetoacetic acid m-xylidide, acetoacetic acid o-toluidide, acetoacetic acid p-toluidide, and acetoacetic acid anilide is then prepared (referred to as "coupler component").
(3) The coupling reaction between the tetrazo reactant and the coupler component is then carried out in a conventional manner under the acidic environment of acetic acid without particular limitations. The conditions at this time include a pH of 3 to 6, a temperature of 5 to 30°C, and a time of period of 30 to 180 minutes (referred to as "reaction slurry").
(4) The reaction slurry is subsequently stirred while heating at 60 to 110°C for 0.2 to 120 minutes, preferably at 80°C for 90 minutes.
(5) The resultant slurry is then filtered, washed with water, dried, and ground.

For the purpose of improving the dispersibility of the disazo pigment, it is possible to carry out surface treatment using any of the following: a nonionic surface active agent, a cationic surface active agent, an anionic surface active agent, a resin, and rosin.

Among the aforementioned, surface treatment using rosin is preferred from the standpoint of significantly improving the dispersibility, and additionally improving the transparency thereof.

Surface treatment processes using rosin include, for example, the following method.
(1) A reaction slurry is initially adjusted to a basic pH.
(2) A rosin solution dissolved in an aqueous solution of sodium hydroxide is then added thereto.
(3) The reaction mixture is stirred while heating at 60 to 100°C for 0.2 to 120 minutes, preferably at 90°C for 90 minutes.
(4) Hydrochloric acid is then added dropwise thereto to bring about precipitation of the rosin; or alternatively an inorganic salt, e.g., calcium chloride, aluminum sulfate, aluminum chloride, etc. is added to convert the rosin into a nonsoluble salt.
(5) The resultant mixture is then filtered, washed with water, dried, and ground.

As a method for manufacturing the pigment composition containing a disazo pigment and composition comprising the aforementioned disazo compound mixture, according to the present invention, the following two methods can be mentioned.
(1) A method in which an aqueous suspension, containing a composition comprising the aforementioned disazo compound mixture, is added to an aqueous suspension, containing a disazo pigment.
(2) A method in which a composition, comprising the aforementioned disazo compound mixture in a powder form after grinding, is added to a disazo pigment, which has also been ground into powder form.

In the present invention, there are cases of only small improvement in the flow ability, when the composition, comprising the aforementioned disazo compound mixture, is coated with rosin. Thus, the following methods are recommended as methods for manufacturing a rosin-treated disazo pigment and a pigment composition containing a disazo compound mixture.
(1) A method in which, after preparing a rosin-treated disazo pigment by means of either precipitation of rosin using an acid or conversion of rosin to a nonsoluble salt, an aqueous suspension, containing a composition comprising the aforementioned disazo compound mixture, is added to an aqueous suspension, containing a rosin-treated disazo pigment.
(2) A method in which a composition, comprising the aforementioned disazo compound mixture in a powdered form, is added to a disazo pigment, which has also been ground into powder form.

In other words, as a pigment composition according to the present invention, one comprising a rosin-treated disazo pigment, and a rosin-untreated composition comprising a disazo compound mixture, formed by means of reacting 39 to 47 mol% of acetoacetic acid m-xylidide, 11 to 19 mol% of acetoacetic acid o-toluidide, and 38 to 46 mol% of 2-acetoacetylamino benzoic acid, as the coupler components, with a tetrazo compound of 3,3'-dichlorobenzidine, as the tetrazo component, is preferred.

This pigment composition according to the present invention provides a flow ability which is superior to that of a conventional disazo pigment used "as it is", i.e., using a pigment composition prepared by treating the surface of a disazo compound mixture with a rosin as the "disazo pigment" itself, the disazo compound being formed by means of reacting 2 to 40 mol% of acetoacetic acid m-xylidide, 97.9 to 60 mol% of acetoacetic acid o-toluidide, and 0.1 to 10 mol% of 2-acetoacetylamino benzoic acid, as the coupler components, with a tetrazo compound of 3,3'-dichlorobenzidine, as the tetrazo component.

In the present invention, the proportional content of the disazo pigment comprises 85 to 99% by weight of the disazo pigment and 1 to 15% by weight of the composition formed from the aforementioned disazo compound mixture, and preferably 93 to 97% by weight of the disazo pigment and 3 to 7% by weight of the composition formed from the aforementioned disazo compound mixture. In this manner, regarding the pigment composition prepared, the improvement in the flow ability decreases as the proportional content of the composition formed from the aforementioned disazo compound mixture is decreased; while the tinting strength of the pigment decreases as the proportional content of the composition formed from the aforementioned disazo compound mixture is increased.

The printing ink containing the pigment composition according to the present invention may be manufactured, for example, according either of the processes below.
(1) A method in which a varnish and the pigment composition containing the disazo pigment and the composition formed from the aforementioned disazo compound mixture are dispersed using a dispersing apparatus.
(2) A method in which a varnish, the disazo pigment, and the composition formed from the aforementioned disazo compound mixture are dispersed using a dispersing apparatus.

As the dispersing apparatus, there can be mentioned, for example, a triple-roll mill, beads mill, kneader, and the like.

Examples of the aforementioned varnish include a mixture comprising a resin, such as a rosin-modified phenol resin, petroleum resin, alkyd resin, or a drying oil-modified resin of the aforementioned resins; and when necessary, plant oils such as linseed oil, tung oil, soybean oil, and the like; and a solvent, such as n-paraffin, isoparaffin, aromatic, naphthene, α-olefin, and the like. The mixing proportional weight of the aforementioned comprises a resin : plant oil : solvent ratio = 20 - 50 parts : 0 - 30 parts : 10 - 60 parts. In addition, a varnish containing an acrylic acid ester can also be mentioned.

Commonly known additives such as ink solvents, dryers, leveling agents and thickeners may also be appropriately blended into the printing ink containing the disazo pigment composition of the present invention, as needed.

### Examples

Hereinbelow, the present invention shall be explained in further detail by means of the examples, comparative examples and test examples; however, the present invention should not be construed as being limited by these examples. Additionally, the "parts" and "%" as used in the following examples always signify "parts by weight" or "% by weight" where there are no statements to the contrary.

### Disazo Compound Mixture Manufacturing Example 1

After blending together and stirring 38.2 parts of 3,3'-dichlorobenzidine, 85 parts of 35% hydrochloric acid, and 800 parts of water, an aqueous solution comprising 21.9 parts of sodium nitrite was added thereto while cooling with ice to obtain a tetrazo solution of 3,3'-dichlorobenzidine. While stirring, a dispersion comprising 26.7 parts of 2-acetoacetylamino benzoic acid dispersed in 250 parts of water was then added dropwise over the course of two hours to the aforementioned tetrazo solution, and the stirring was continued for an additional hour to obtain an orange-colored slurry.

After dissolving 26.0 parts of acetoacetic acid m-xylidide and 10.4 parts of acetoacetic acid o-toluidide in an aqueous solution comprising 30.6 parts of sodium hydroxide in 600 parts of water, a dilute solution of 52.1 parts of acetic acid in 200 parts of water was added dropwise thereto, over the course of one hour, to precipitate the crystals. Subsequently, the temperature of the reaction intermediate was adjusted to 15 to 17°C, and the aforementioned orange-colored slurry was added dropwise thereto, over the course of two hours, to obtain an orange-yellow slurry of a disazo compound.

The resultant slurry was stirred for one hour, heated to 90°C, and then stirred again for an additional two hours. The resultant mixture was then filtered and washed with water to obtain a wet cake of a disazo compound mixture. The wet cake was subsequently dried at 90°C and ground to yield a disazo compound mixture in powder form (Disazo Compound Mixture 1).

This disazo compound mixture corresponded to a disazo compound mixture obtained by reacting 42 mol% of acetoacetic acid m-xylidide, 18 mol% of acetoacetic acid o-toluidide, and 40 mol% of 2-acetoacetylamino benzoic acid, as the coupler components, with a tetrazo compound of 3,3'-dichlorobenzidine, as the tetrazo component.

### Disazo Compound Mixture Manufacturing Comparative Example 1

A disazo compound mixture was manufactured according to a method for manufacturing disazo pigment compounds disclosed in Japanese Patent Application, First Publication, No. Sho 63-178169. A concrete manufacturing method is described in the following.

After blending together and stirring 38.2 parts of 3,3'-dichlorobenzidine, 85 parts of 35% hydrochloric acid, and 800 parts of water, an aqueous solution comprising 21.9 parts of sodium nitrite was added thereto while cooling with ice to obtain a tetrazo solution of 3,3'-dichlorobenzidine. While stirring, a dispersion comprising 33.4 parts of 2-acetoacetylamino benzoic acid dispersed in 250 parts of water was then added dropwise over the course of two hours to the aforementioned tetrazo solution, and the stirring was continued for an additional hour to obtain an orange-colored slurry.

After dissolving 28.8 parts of acetoacetic acid o-toluidide in an aqueous solution comprising 30.6 parts of sodium hydroxide in 600 parts of water, a dilute solution of 52.1 parts of acetic acid in 200 parts of water was added dropwise thereto, over the course of one hour, to precipitate the crystals. Subsequently, the temperature of the reaction intermediate was cooled to 5 to 10°C, and the aforementioned orange-colored slurry was added dropwise thereto, over the course of two hours, to obtain an orange-yellow slurry of a disazo compound.

The resultant slurry was stirred for one hour, heated to 90°C, and then stirred again for an additional two hours. The resultant mixture was then filtered and washed with water to obtain a wet cake of a disazo compound mixture. The wet cake was subsequently dried at 90°C and ground to yield a disazo compound mixture in powder form (Comparative Disazo Compound Mixture 1).

### Disazo Compound Mixture Manufacturing Comparative Example 2

A disazo compound mixture (Comparative Disazo Compound Mixture 2) was obtained, in the same manner as in the manufacturing of the disazo compound mixture according to Disazo Compound Mixture Manufacturing Comparative Example 1, with the exception that 31.0 parts of acetoacetic acid m-xylidide was used instead of 28.8 parts of acetoacetic acid o-toluidide.

### Disazo Compound Mixture Manufacturing Comparative Example 3

A disazo compound mixture (Comparative Disazo Compound Mixture 3) was obtained, by means of mixing 28.6 parts of Comparative Disazo Compound Mixture 1 and 71.4 parts of Comparative Disazo Compound Mixture 2.

### Disazo Pigment Manufacturing Example 1

The hydrochloride salt of 3,3'-dichlorobenzidine (which was equivalent to 250 parts of 3,3'-dichlorobenzidine), and 316 parts of 35% hydrochloric acid were added to 4000 parts of water. After cooling the resultant solution to 0°C, 358 parts of a 40% sodium nitrite solution was added, and the solution was stirred for an hour. A small amount of sulfamic acid was then added to the resultant solution to dissipate the excess sodium nitrite, to obtain a tetrazo solution of 3,3'-dichlorobenzidine.

In addition, 415 parts of acetoacetic acid m-xylidide and 835 parts of 25% an aqueous solution of sodium hydroxide were added to 7500 parts of water, and dissolved therein. Subsequently, 3150 parts of 10% acetic acid was gradually added to this solution, to obtain a suspension.

The tetrazo solution was added to this suspension, over the course of two hours, during which time, the temperature of the reaction liquid was maintained at 15 to 17°C. After further stirring the reaction liquid for one hour, the reaction liquid was adjusted to a pH of 12 using an aqueous solution of sodium hydroxide. Rosin, which had been dissolved in an aqueous solution of sodium hydroxide (equivalent of 100 parts of rosin), was then added thereto. The resultant mixture was heated to 90°C, and then stirred for two hours. Subsequently, 75 parts of 35% calcium chloride was added, and the mixture was stirred for an additional hour.

The resultant mixture was then filtered and washed with water to obtain a press cake of a disazo pigment. The press cake was subsequently dried at 90°C and ground to yield a powdered disazo pigment (Disazo Pigment 1).

This disazo pigment corresponded to a rosin-treated, disazo pigment (C. I. Pigment Yellow 13) obtained by reacting 100 mol% of acetoacetic acid m-xylidide as the coupler component, with a tetrazo compound of 3,3'-dichlorobenzidine, as the tetrazo component.

### Disazo Pigment Manufacturing Example 2

A powdered disazo pigment (Disazo Pigment 2) was obtained, in the same manner as in the manufacturing of a disazo pigment according to Disazo Pigment Manufacturing Example 1, with the exception that 332.2 parts of acetoacetic acid m-xylidide and 77.4 parts of acetoacetic acid o-toluidide were used, instead of the 415 parts of acetoacetic acid m-xylidide.

This disazo pigment corresponded to a rosin-treated, disazo pigment (including a compound with an identical chemical structure to that of C. I. Pigment Yellow 13, a compound with an identical chemical structure to that of C. I. Pigment Yellow 14, and a compound represented by Formula (I)), obtained by reacting 80 mol% of acetoacetic acid m-xylidide and 20 mol% of acetoacetic acid o-toluidide, as the mixed coupler components, with a tetrazo compound of 3,3'-dichlorobenzidine, as the tetrazo component.

### Disazo Pigment Manufacturing Example 3

A powdered disazo pigment (Disazo Pigment 3) was obtained, in the same manner as in the manufacturing of a disazo pigment according to Disazo Pigment Manufacturing Example 1, with the exception that 311.5 parts of acetoacetic acid m-xylidide and 96.7 parts of acetoacetic acid o-toluidide were used, instead of the 415 parts of acetoacetic acid m-xylidide.

This disazo pigment corresponded to a rosin-treated, disazo pigment (including a compound with an identical chemical structure to that of C. I. Pigment Yellow 13, a compound with an identical chemical structure to that of C. I. Pigment Yellow 14, and a compound represented by Formula (I)), obtained by reacting 75 mol% of acetoacetic acid m-xylidide and 25 mol% of acetoacetic acid o-toluidide, as the mixed coupler components, with a tetrazo compound of 3,3'-dichlorobenzidine, as the tetrazo component.

### Disazo Pigment Manufacturing Example 4

A powdered disazo pigment (Disazo Pigment 4) was obtained, in the same manner as in the manufacturing of a disazo pigment according to Disazo Pigment Manufacturing Example 1, with the exception that 269.9 parts of acetoacetic acid m-xylidide and 135.4 parts of acetoacetic acid o-toluidide were used, instead of the 415 parts of acetoacetic acid m-xylidide.

This disazo pigment corresponded to a rosin-treated, disazo pigment (including a compound with an identical chemical structure to that of C. I. Pigment Yellow 13, a compound with an identical chemical structure to that of C. I. Pigment Yellow 14, and a compound represented by Formula (I)), obtained by reacting 65 mol% of acetoacetic acid m-xylidide and 35 mol% of acetoacetic acid o-toluidide, as the mixed coupler components, with a tetrazo compound of 3,3'-dichlorobenzidine, as the tetrazo component.

### Disazo Pigment Manufacturing Example 5

A powdered disazo pigment (Disazo Pigment 5) was obtained, in the same manner as in the manufacturing of a disazo pigment according to Disazo Pigment Manufacturing Example 1, with the exception that 83.1 parts of acetoacetic acid m-xylidide and 309.5 parts of acetoacetic acid o-toluidide were used, instead of the 415 parts of acetoacetic acid m-xylidide.

This disazo pigment corresponded to a rosin-treated, disazo pigment (including a compound with an identical chemical structure to that of C. I. Pigment Yellow 13, a compound with an identical chemical structure to that of C. I. Pigment Yellow 14, and a compound represented by Formula (I)), obtained by reacting 20 mol% of acetoacetic acid m-xylidide and 80 mol% of acetoacetic acid o-toluidide, as the mixed coupler components, with a tetrazo compound of 3,3'-dichlorobenzidine, as the tetrazo component.

### Disazo Pigment Manufacturing Example 6

A powdered disazo pigment (Disazo Pigment 6) was obtained, in the same manner as in the manufacturing of a disazo pigment according to Disazo Pigment Manufacturing Example 1, with the exception that 386.9 parts of acetoacetic acid o-toluidide were used, instead of the 415 parts of acetoacetic acid m-xylidide.

This disazo pigment corresponded to a rosin-treated, disazo pigment (C. I. Pigment Yellow 14), obtained by reacting 100 mol% of acetoacetic acid o-toluidide, as the coupler component, with a tetrazo compound of 3,3'-dichlorobenzidine, as the tetrazo component.

### Disazo Pigment Manufacturing Example 7

A powdered disazo pigment (Disazo Pigment 7) was obtained, in the same manner as in the manufacturing of a disazo pigment according to Disazo Pigment Manufacturing Example 1, with the exception that 386.9 parts of acetoacetic acid p-toluidide were used, instead of the 415 parts of acetoacetic acid m-xylidide.

This disazo pigment corresponded to a rosin-treated, disazo pigment (C. I. Pigment Yellow 55), obtained by reacting 100 mol% of acetoacetic acid p-toluidide, as the coupler component, with a tetrazo compound of 3,3'-dichlorobenzidine, as the tetrazo component.

### Test Example 1

A mill base was prepared using a laboratory mixer, by means of mixing a pigment composition, formed by mixing 95 parts of Disazo Pigment 1 and 5 parts of Disazo Compound Mixture 1, in a stainless steel container containing 300 parts of varnish (containing a rosin-modified phenol resin), which had been heated to 40°C. A base ink was then prepared by means of milling this mill base using a triple-roll mill. A test ink was then prepared by means of gradually adding 170 parts of varnish for a lithographic ink and 5 parts of light oil to the aforementioned base ink while running the triple-roll mill.

The flow ability on a glass plate and transparency of the test ink, prepared according to the aforementioned method, were subsequently evaluated, and these results are shown in Table 1.

### Comparative Text Example 1-1

A mill base was prepared using a laboratory mixer, by means of mixing a pigment composition, formed by mixing 95 parts of Disazo Pigment 1 and 5 parts of Comparative Disazo Compound Mixture 1, in a stainless steel container containing 300 parts of varnish (containing a rosin-modified phenol resin), which had been heated to 40°C. A base ink was then prepared by means of milling this mill base using a triple-roll mill. A test ink was then prepared by means of gradually adding 170 parts of varnish for a lithographic ink and 5 parts of light oil to the aforementioned base ink while running the triple-roll mill.

The flow ability on a glass plate and transparency of the test ink, prepared according to the aforementioned method, were subsequently evaluated, and these results are shown in Table 1.

### Comparative Text Example 1-2

A mill base was prepared using a laboratory mixer, by means of mixing a pigment composition, formed by mixing 95 parts of Disazo Pigment 1 and 5 parts of Comparative Disazo Compound Mixture 2, in a stainless steel container containing 300 parts of varnish (containing a rosin-modified phenol resin), which had been heated to 40°C. A base ink was then prepared by means of milling this mill base using a triple-roll mill. A test ink was then prepared by means of gradually adding 170 parts of varnish for a lithographic ink and 5 parts of light oil to the aforementioned base ink while running the triple-roll mill.

The flow ability on a glass plate and transparency of the test ink, prepared according to the aforementioned method, were subsequently evaluated, and these results are shown in Table 1.

### Comparative Text Example 1-3

A mill base was prepared using a laboratory mixer, by means of mixing a pigment composition, formed by mixing 95 parts of Disazo Pigment 1 and 5 parts of Comparative Disazo Compound Mixture 3, in a stainless steel container containing 300 parts of varnish (containing a rosin-modified phenol resin), which had been heated to 40°C. A base ink was then prepared by means of milling this mill base using a triple-roll mill. A test ink was then prepared by means of gradually adding 170 parts of varnish for a lithographic ink and 5 parts of light oil to the aforementioned base ink while running the triple-roll mill.

The flow ability on a glass plate and transparency of the test ink, prepared according to the aforementioned method, were subsequently evaluated, and these results are shown in Table 1.

### Evaluation Method for the Glass Plate Flow Ability

The flow ability on a glass plate was evaluated by lightly mixing and applying a test ink, using a spatula, to the higher end of a glass plate which was inclined to an angle of 70°, allowing the test ink to sit for one hour, and then measuring the distance to the leading edge of the ink which had run towards the lower end. High measured values for the glass plate flow ability indicate a high flow ability. Furthermore, the measured values obtained above are displayed as a percentage, with the test inks obtained in each Test Example designated as 100%.

### Evaluation Method for the Transparency

The test ink was transferred to a white transfer paper onto which a black band had been printed using black ink, and the transferred state of the ink on the black band was evaluated by visual observation. When the transferred ink on the black band was white, the test ink was judged to be opaque, and given a score of 1. In contrast, in the case in which it was difficult to discern whether or not the test ink had been transferred to the black band, the test ink was judged as transparent, and given a score of 5.

**TABLE 1**

| Test Sample | Glass plate flow ability | Transparency |
|---|---|---|
| Test Example 1 | 100% | 3 |
| Comparative Test Example 1-1 | 18% | 3 |
| Comparative Test Example 1-2 | 68% | 3 |
| Comparative Test Example 1-3 | 60% | 3 |

### Test Example 2

The transparency and the glass plate flow ability of a test ink, which was prepared in the same manner as in Test Example 1 with the exception that Disazo Pigment 2 was used instead of Disazo Pigment 1, were measured, and these results are shown in Table 2.

### Comparative Test Example 2-1

The transparency and the glass plate flow ability of a test ink, which was prepared in the same manner as in Comparative Test Example 1-1 with the exception that Disazo Pigment 2 was used instead of Disazo Pigment 1, were measured, and these results are shown in Table 2.

### Comparative Test Example 2-2

The transparency and the glass plate flow ability of a test ink, which was prepared in the same manner as in Comparative Test Example 1-2 with the exception that Disazo Pigment 2 was used instead of Disazo Pigment 1, were measured, and these results are shown in Table 2.

### Comparative Test Example 2-3

The transparency and the glass plate flow ability of a test ink, which was prepared in the same manner as in Comparative Test Example 1-3 with the exception that Disazo Pigment 2 was used instead of Disazo Pigment 1, were measured, and these results are shown in Table 2.

**TABLE 2**

| Test Sample | Glass plate flow ability | Transparency |
|---|---|---|
| Test Example 2 | 100% | 4 |
| Comparative Test Example 2-1 | 22% | 4 |
| Comparative Test Example 2-2 | 64% | 4 |
| Comparative Test Example 2-3 | 56% | 4 |

### Test Example 3

The transparency and the glass plate flow ability of a test ink, which was prepared in the same manner as in Test Example 1 with the exception that Disazo Pigment 3 was used instead of Disazo Pigment 1, were measured, and these results are shown in Table 3.

### Comparative Test Example 3-1

The transparency and the glass plate flow ability of a test ink, which was prepared in the same manner as in Comparative Test Example 1-1 with the exception that Disazo Pigment 3 was used instead of Disazo Pigment 1, were measured, and these results are shown in Table 3.

### Comparative Test Example 3-2

The transparency and the glass plate flow ability of a test ink, which was prepared in the same manner as in Comparative Test Example 1-2 with the exception that Disazo Pigment 3 was used instead of Disazo Pigment 1, were measured, and these results are shown in Table 3.

### Comparative Test Example 3-3

The transparency and the glass plate flow ability of a test ink, which was prepared in the same manner as in Comparative Test Example 1-3 with the exception that Disazo Pigment 3 was used instead of Disazo Pigment 1, were measured, and these results are shown in Table 3.

**TABLE 3**

| Test Sample | Glass plate flow ability | Transparency |
|---|---|---|
| Test Example 3 | 100% | 5 |
| Comparative Test Example 3-1 | 25% | 5 |
| Comparative Test Example 3-2 | 56% | 5 |
| Comparative Test Example 3-3 | 57% | 5 |

### Test Example 4

The transparency and the glass plate flow ability of a test ink, which was prepared in the same manner as in Test Example 1 with the exception that Disazo Pigment 4 was used instead of Disazo Pigment 1, were measured, and these results are shown in Table 4.

### Comparative Test Example 4-1

The transparency and the glass plate flow ability of a test ink, which was prepared in the same manner as in Comparative Test Example 1-1 with the exception that Disazo Pigment 4 was used instead of Disazo Pigment 1, were measured, and these results are shown in Table 4.

### Comparative Test Example 4-2

The transparency and the glass plate flow ability of a test ink, which was prepared in the same manner as in Comparative Test Example 1-2 with the exception that Disazo Pigment 4 was used instead of Disazo Pigment 1, were measured, and these results are shown in Table 4.

### Comparative Test Example 4-3

The transparency and the glass plate flow ability of a test ink, which was prepared in the same manner as in Comparative Test Example 1-3 with the exception that Disazo Pigment 4 was used instead of Disazo Pigment 1, were measured, and these results are shown in Table 4.

**TABLE 4**

| Test Sample | Glass plate flow ability | Transparency |
|---|---|---|
| Test Example 4 | 100% | 5 |
| Comparative Test Example 4-1 | 60% | 5 |
| Comparative Test Example 4-2 | 54% | 5 |
| Comparative Test Example 4-3 | 58% | 5 |

### Test Example 5

The transparency and the glass plate flow ability of a test ink, which was prepared in the same manner as in Test Example 1 with the exception that Disazo Pigment 5 was used instead of Disazo Pigment 1, were measured, and these results are shown in Table 5.

### Comparative Test Example 5-1

The transparency and the glass plate flow ability of a test ink, which was prepared in the same manner as in Comparative Test Example 1-1 with the exception that Disazo Pigment 5 was cased instead of Disazo Pigment 1, were measured, and these results are shown in Table 5.

### Comparative Test Example 5-2

The transparency and the glass plate flow ability of a test ink, which was prepared in the same manner as in Comparative Test Example 1-2 with the exception that Disazo Pigment 5 was used instead of Disazo Pigment 1, were measured, and these results are shown in Table 5.

### Comparative Test Example 5-3

The transparency and the glass plate flow ability of a test ink, which was prepared in the same manner as in Comparative Test Example 1-3 with the exception that Disazo Pigment 5 was used instead of Disazo Pigment 1, were measured, and these results are shown in Table 5.

**TABLE 5**

| Test Sample | Glass plate flow ability | Transparency |
|---|---|---|
| Test Example 5 | 100% | 4 |
| Comparative Test Example 5-1 | 68% | 4 |
| Comparative Test Example 5-2 | 50% | 4 |
| Comparative Test Example 5-3 | 41% | 4 |

### Test Example 6

The transparency and the glass plate flow ability of a test ink, which was prepared in the same manner as in Test Example 1 with the exception that Disazo Pigment 6 was used instead of Disazo Pigment 1, were measured, and these results are shown in Table 6.

### Comparative Test Example 6-1

The transparency and the glass plate flow ability of a test ink, which was prepared in the same manner as in Comparative Test Example 1-1 with the exception that Disazo Pigment 6 was used instead of Disazo Pigment 1, were measured, and these results are shown in Table 6.

### Comparative Test Example 6-2

The transparency and the glass plate flow ability of a test ink, which was prepared in the same manner as in Comparative Test Example 1-2 with the exception that Disazo Pigment 6 was used instead of Disazo Pigment 1, were measured, and these results are shown in Table 6.

### Comparative Test Example 6-3

The transparency and the glass plate flow ability of a test ink, which was prepared in the same manner as in Comparative Test Example 1-3 with the exception that Disazo Pigment 6 was used instead of Disazo Pigment 1, were measured, and these results are shown in Table 6.

**TABLE 6**

| Test Sample | Glass plate flow ability | Transparency |
|---|---|---|
| Test Example 6 | 100% | 2 |
| Comparative Test Example 6-1 | 75% | 2 |
| Comparative Test Example 6-2 | 36% | 2 |
| Comparative Test Example 6-3 | 40% | 2 |

### Test Example 7

The transparency and the glass plate flow ability of a test ink, which was prepared in the same manner as in Test Example 1 with the exception that Disazo Pigment 7 was used instead of Disazo Pigment 1, were measured, and these results are shown in Table 7.

### Comparative Test Example 7-1

The transparency and the glass plate flow ability of a test ink, which was prepared in the same manner as in Comparative Test Example 1-1 with the exception that Disazo Pigment 7 was used instead of Disazo Pigment 1, were measured, and these results are shown in Table 7.

### Comparative Test Example 7-2

The transparency and the glass plate flow ability of a test ink, which was prepared in the same manner as in Comparative Test Example 1-2 with the exception that Disazo Pigment 7 was used instead of Disazo Pigment 1, were measured, and these results are shown in Table 7.

### Comparative Test Example 7-3

The transparency and the glass plate flow ability of a test ink, which was prepared in the same manner as in Comparative Test Example 1-3 with the exception that Disazo Pigment 7 was used instead of Disazo Pigment 1, were measured, and these results are shown in Table 7.

**TABLE 7**

| Test Sample | Glass plate flow ability | Transparency |
|---|---|---|
| Test Example 7 | 100% | 2 |
| Comparative Test Example 7-1 | 70% | 2 |
| Comparative Test Example 7-2 | 48% | 2 |
| Comparative Test Example 7-3 | 55% | 2 |

### Disazo Compound Mixture Manufacturing Example 2:

A disazo compound mixture (Disazo Compound Mixture 2) was obtained, in the same manner as in the manufacturing of a disazo compound mixture according to Disazo Compound Mixture Manufacturing Example 1, with the exception that 28.7 parts of 2-acetoacetylamino benzoic acid, 27.9 parts of acetoacetic acid m-xylidide, and 6.9 parts of acetoacetic acid o-toluidide were used instead of the 26.7 parts of 2-acetoacetylamino benzoic acid, 26.0 parts of acetoacetic acid m-xylidide, and 10.4 parts of acetoacetic acid o-toluidide.

This disazo compound mixture corresponded to a disazo compound mixture obtained by reacting 45 mol% of acetoacetic acid m-xylidide, 12 mol% of acetoacetic acid o-toluidide, and 43 mol% of 2-acetoacetylamino benzoic acid, as the mixed coupler component, with a tetrazo compound of 3,3'-dichlorobenzidine, as the tetrazo component.

### Test Example 8

The transparency and the glass plate flow ability of the test ink, which was prepared in the same manner as in Example 1 with the exception that Disazo Compound Mixture 2 and Disazo Pigment 3 were used instead of Disazo Compound Mixture 1 and Disazo Pigment 1, were measured, and these results are shown in Table 8.

### Comparative Test Example 8-1

The transparency and the glass plate flow ability of the test ink, which was prepared in the same manner as in Comparative Test Example 1-1 with the exception that Disazo Pigment 3 was used instead of Disazo Pigment 1, were measured, and these results are shown in Table 8.

### Comparative Test Example 8-2

The transparency and the glass plate flow ability of the test ink, which was prepared in the same manner as in Comparative Test Example 1-2 with the exception that Disazo Pigment 3 was used instead of Disazo Pigment 1, were measured, and these results are shown in Table 8.

### Comparative Test Example 8-3

The transparency and the glass plate flow ability of the test ink, which was prepared in the same manner as in Comparative Test Example 1-3 with the exception that Disazo Pigment 3 was used instead of Disazo Pigment 1, were measured, and these results are shown in Table 8.

**TABLE 8**

| Test Sample | Glass plate flow ability | Transparency |
|---|---|---|
| Test Example 8 | 100% | 5 |
| Comparative Test Example 8-1 | 27% | 5 |
| Comparative Test Example 8-2 | 58% | 5 |
| Comparative Test Example 8-3 | 60% | 5 |

The test inks obtained in Test Examples 1 to 8, which were prepared by means of using the pigment composition according to the present invention, are regarded as printing inks exhibiting a superior flow ability. The test inks according to the conventional methods, obtained in Comparative Test Examples 1-1 to 8-3, are regarded as printing inks displaying an inferior flow ability.

### INDUSTRIAL APPLICABILITY

The composition (i.e., an additive for a disazo pigment) comprising a disazo compound mixture according to the present invention, contains three specific types of disazo compounds as essential components, and thus possesses a desirable dispersability compared to that of the conventional disazo pigments, when mixed and used with a disazo pigment. Hence, the pigment composition containing a disazo pigment, and the composition comprising said disazo compound mixture, is able to provide a printing ink with a superior flow ability.

In addition, the present invention provides an additive for a disazo pigment comprising a disazo compound mixture, which is obtained by means of reacting specific coupler components, with a specific molar ratio, and thus possesses a desirable dispersability compared to the conventional disazo pigments, when mixed and used with a disazo pigment. Therefore, in the same manner as above, the pigment composition containing a disazo pigment, and the composition comprising said disazo compound mixture, is able to provide a printing ink with a superior flow ability.

In particular, when using the specific disazo pigments, the resultant printing ink possesses a high transparency, and is able to produce printed matter more clearly.

## Claims

1. An additive for a disazo pigment containing at least the following disazo compounds respectively represented by the formulae (I), (IV), and (V):

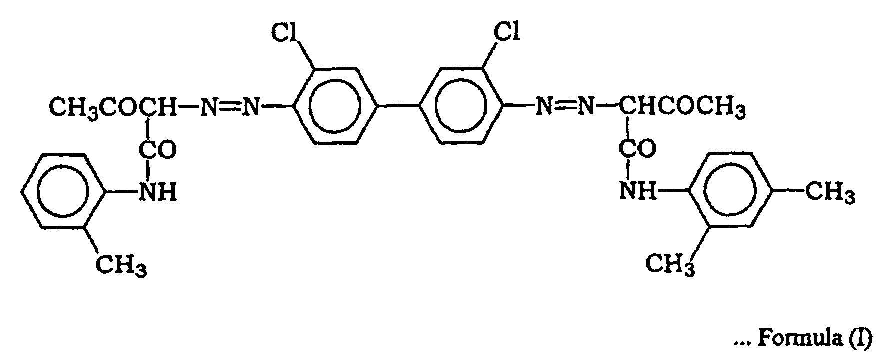

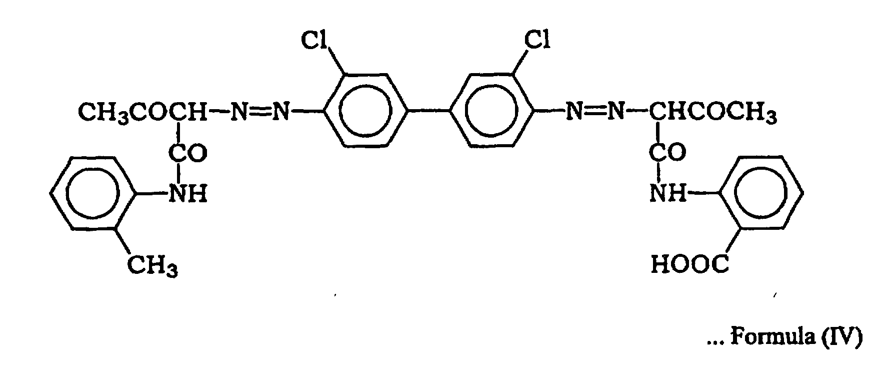

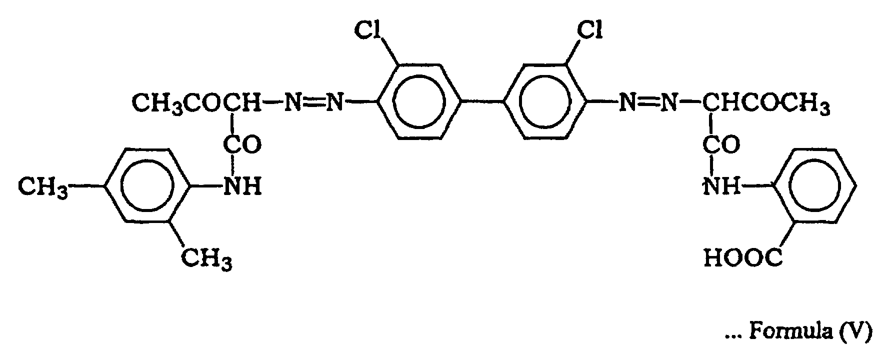

2. An additive for a disazo pigment containing the disazo compounds represented by the following formulae (I) to (VI):

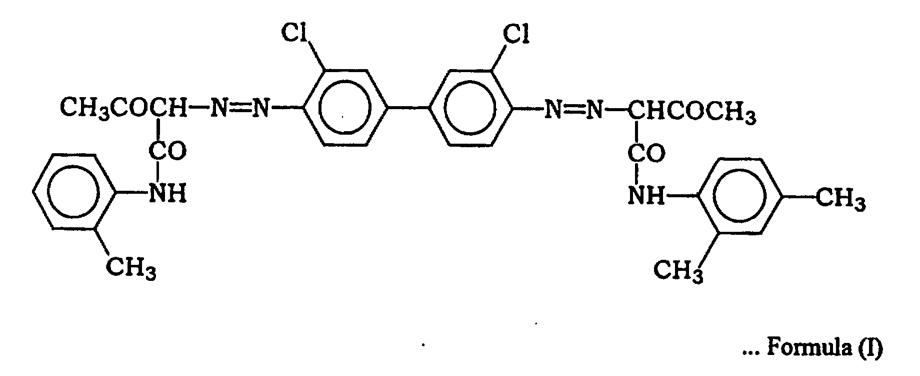

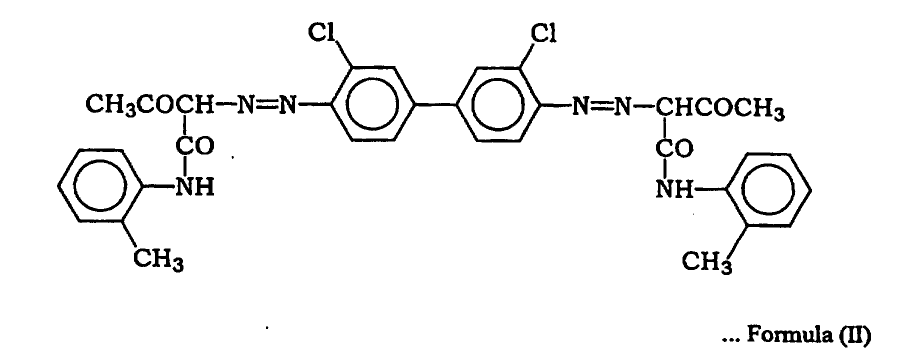

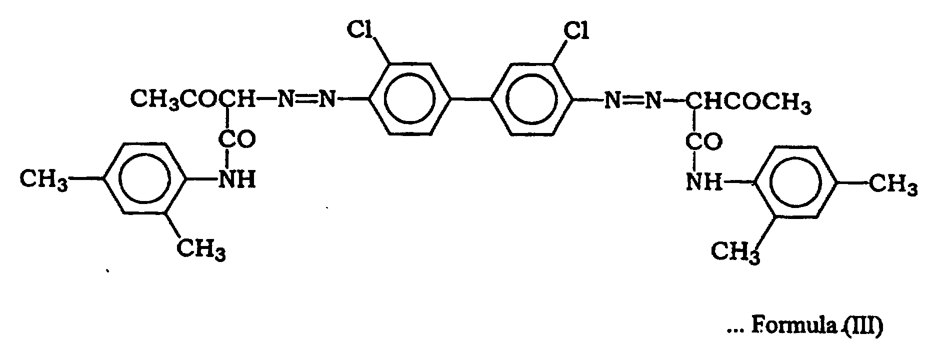

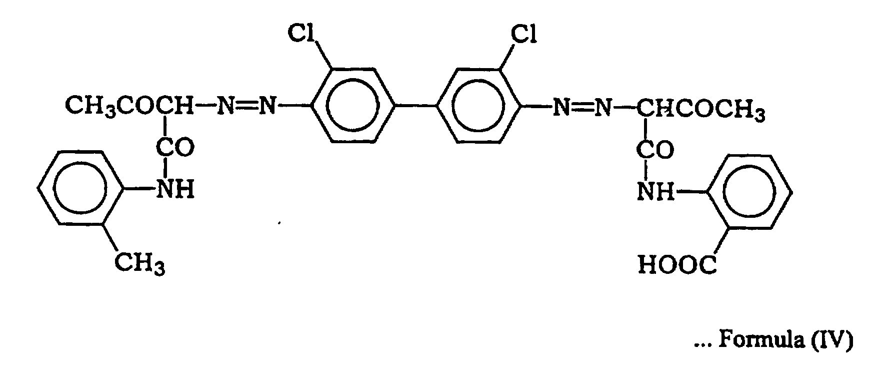

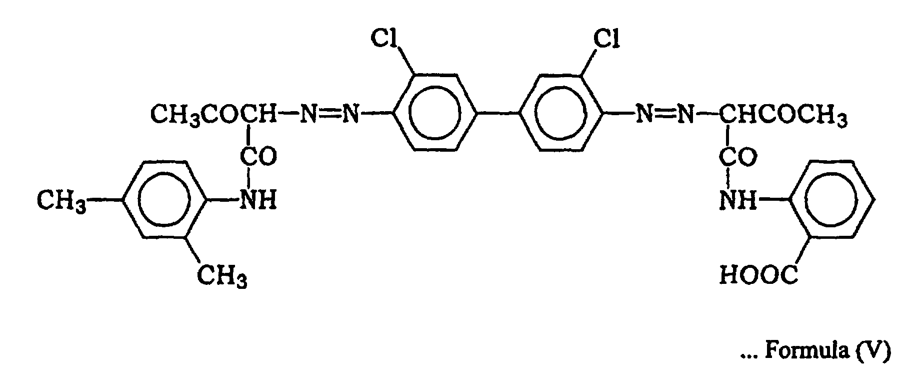

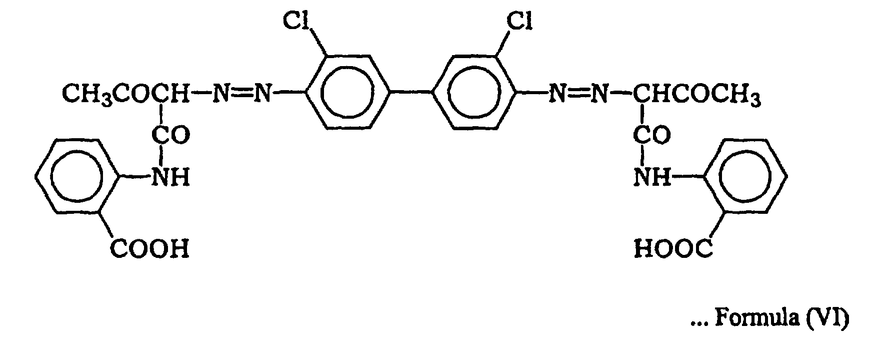

3. An additive for a disazo pigment according to one of Claims 1 and 2, wherein a greater amount of said disazo compound represented by formula (V) is contained than said disazo compound represented by formula (IV).

4. An additive for a disazo pigment containing six types of disazo compounds, which is formed by means of reacting acetoacetic acid m-xylidide, acetoacetic acid o-toluidide, and 2-acetoacetylamino benzoic acid, as coupler components, with a tetrazo compound of 3,3'-dichlorobenzidine, as a tetrazo component.

5. An additive for a disazo pigment according to Claim 4, wherein the molar ratio of said coupler components is 39 - 47 mol% of acetoacetic acid m-xylidide to 11 - 19 mol% of acetoacetic acid o-toluidide to 38 - 46 mol% of 2-acetoacetylamino benzoic acid.

6. An additive for a disazo pigment according to one of Claims 1, 2, 3, 4, and 5, wherein said additive is not treated with rosin.

7. A disazo pigment composition comprising an additive according to one of Claims 1, 2, 3, 4, 5, and 6, and a disazo pigment.

8. A disazo pigment composition, comprising an additive according to one of Claim 1, 2, 3, 4, 5, and 6, and a disazo pigment treated with rosin.

9. A disazo pigment composition according to Claim 7 or 8, wherein said disazo pigment is at least one disazo pigment selected from the group consisting of C. I. Pigment Yellow 13, C. I. Pigment Yellow 14, and a disazo component represented by the Formula (I).

## Patentansprüche

1. Additiv für ein Disazopigment, enthaltend mindestens die folgenden Disazoverbindungen der Formeln (I), (IV) und (V):

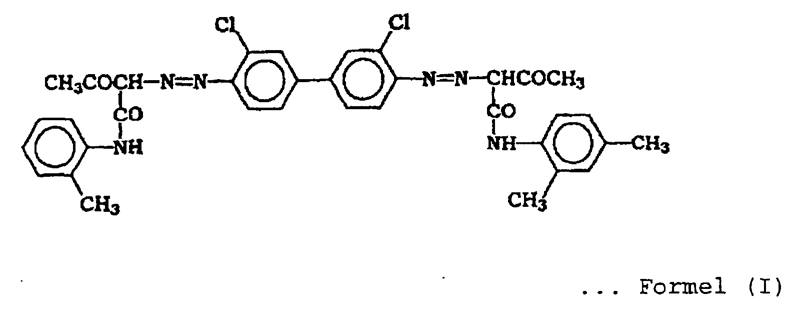

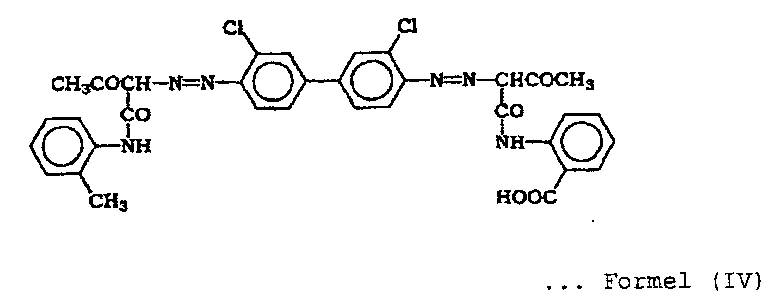

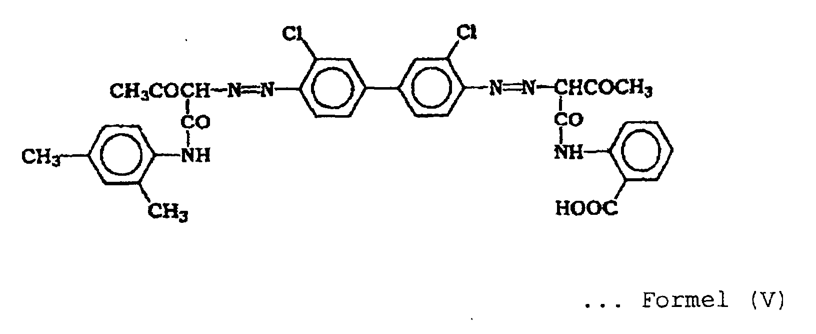

2. Additiv für ein Disazopigment, enthaltend mindestens die folgenden Disazoverbindungen der Formeln (I) bis (VI):

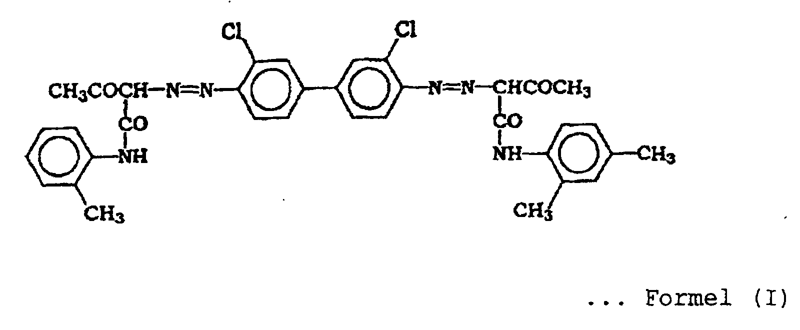

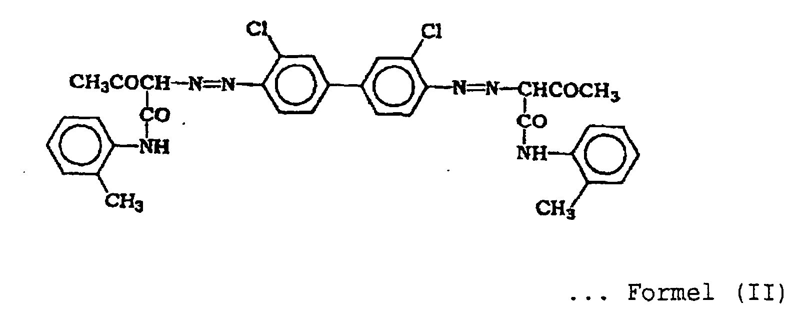

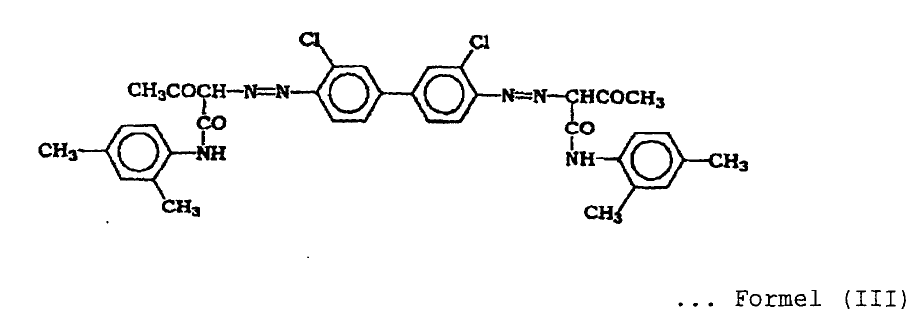

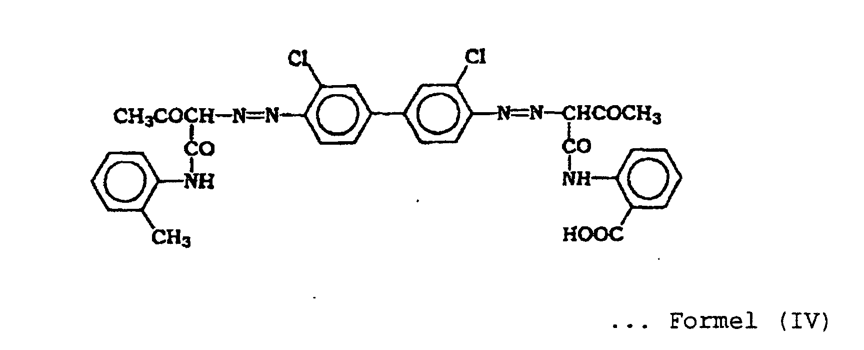

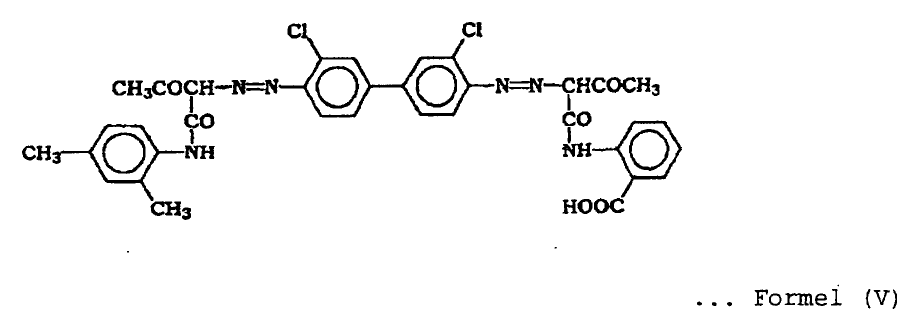

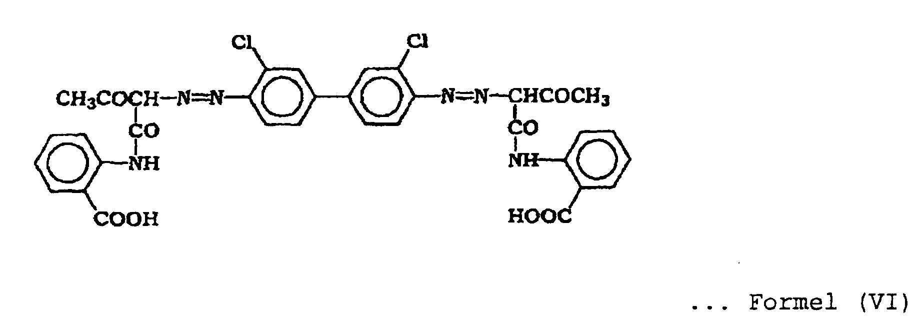

3. Additiv für ein Disazopigment nach Anspruch 1 oder 2, **dadurch gekennzeichnet, dass** eine grössere Menge der Disazoverbindung der Formel (V) als der Disazoverbindung der Formel (IV) enthalten ist.

4. Additiv für ein Disazopigment, enthaltend sechs Arten von Disazoverbindungen, gebildet durch Umsetzung von Acetoessigsäure-m-xylidid, Acetoessigsäure-o-toluidid und 2-Acetoacetylaminobenzoesäure als Kupplerkomponenten mit einer Tetrazoverbindung von 3,3'-Dichlorbenzidin als Tetrazokomponente.

5. Additiv für ein Disazopigment nach Anspruch 4, **dadurch gekennzeichnet, dass** das Molverhältnis der Kupplerkomponenten 39 bis 47 Mol% Acetoessigsäure-m-xylidid zu 11 bis 19 Mol% Acetoessigsäure-o-toluidid zu 38 bis 46 Mol% 2-Acetoacetylaminobenzoesäure beträgt.

6. Additiv für ein Disazopigment nach einem der Ansprüche 1, 2, 3, 4 und 5, **dadurch gekennzeichnet, dass** das Additiv nicht mit Kolophonium behandelt worden ist.

7. Disazopigmentzusammensetzung, umfassend ein Additiv nach einem der Ansprüche 1, 2, 3, 4, 5 und 6, und ein Disazopigment.

8. Disazopigmentzusammensetzung, umfassend ein Additiv nach einem der Ansprüche 1, 2, 3, 4, 5 und 6, und ein mit Kolophonium behandeltes Disazopigment.

9. Disazopigmentzusammensetzung nach Anspruch 7 oder 8, **dadurch gekennzeichnet, dass** das Disazopigment mindestens ein Disazopigment, ausgewählt aus der Gruppe, bestehend aus C.I.-Pigmentgelb 13, C.I.-Pigmentgelb 14 und einer Disazokomponente der Formel (I) ist.

## Revendications

1. Additif pour un pigment diazoïque contenant au moins les composés diazoïques suivants représentés respectivement par les Formules (I), (IV) et (V)

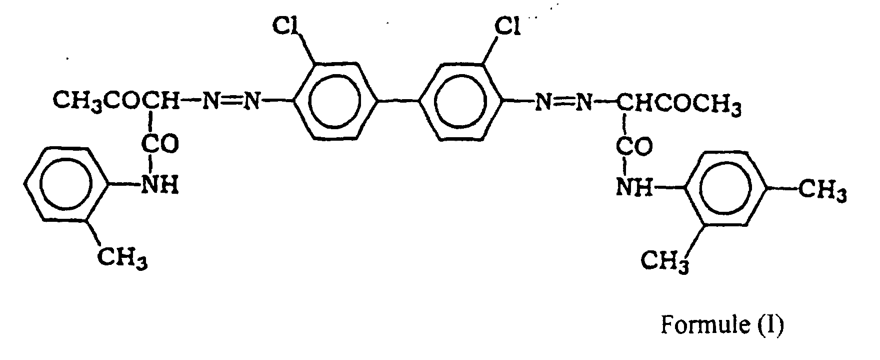

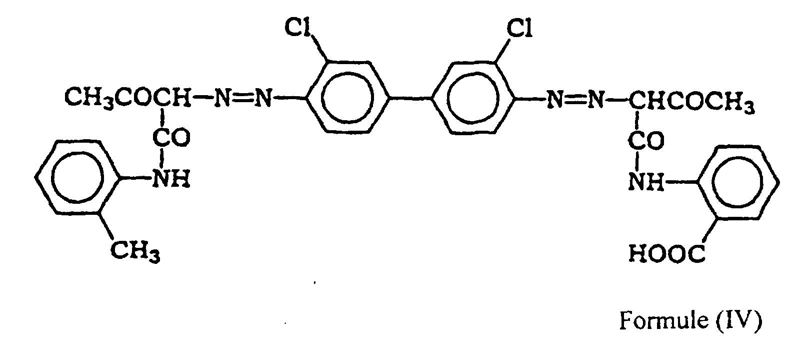

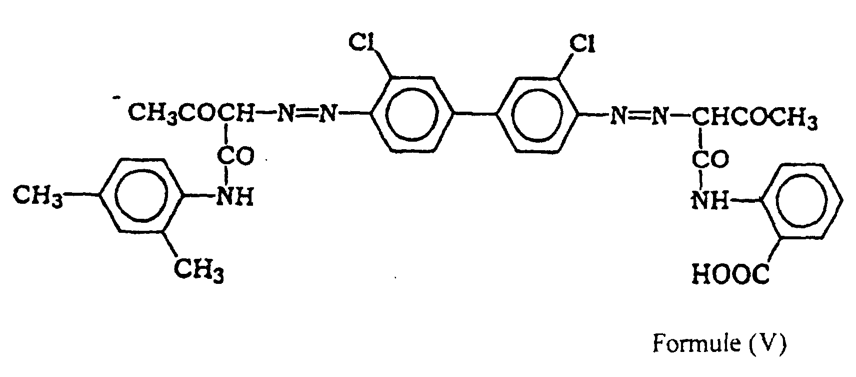

2. Additif pour un pigment diazoïque contenant les composés diazoïques représentés par les Formules (I) à (VI) suivantes:

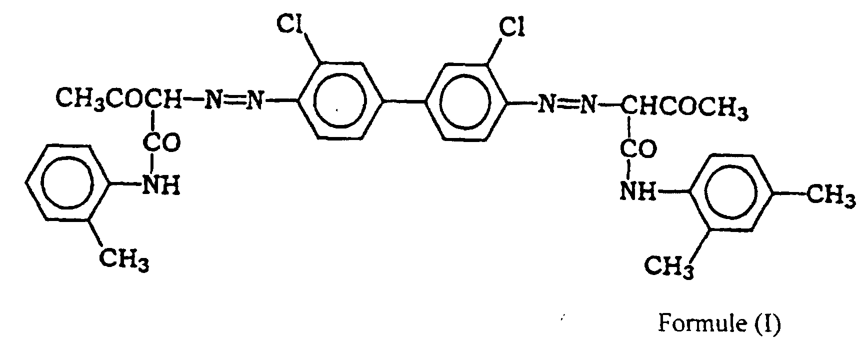

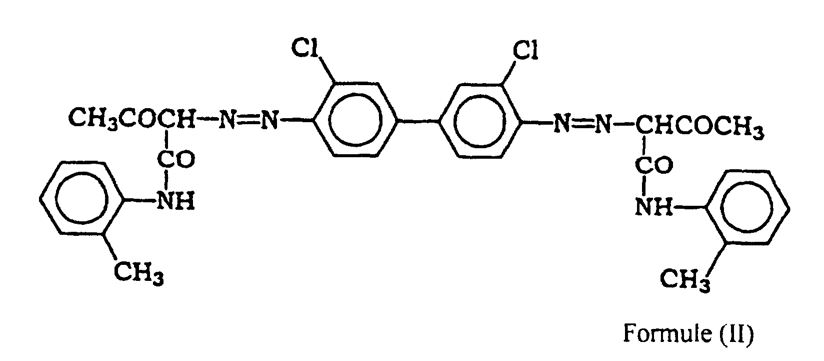

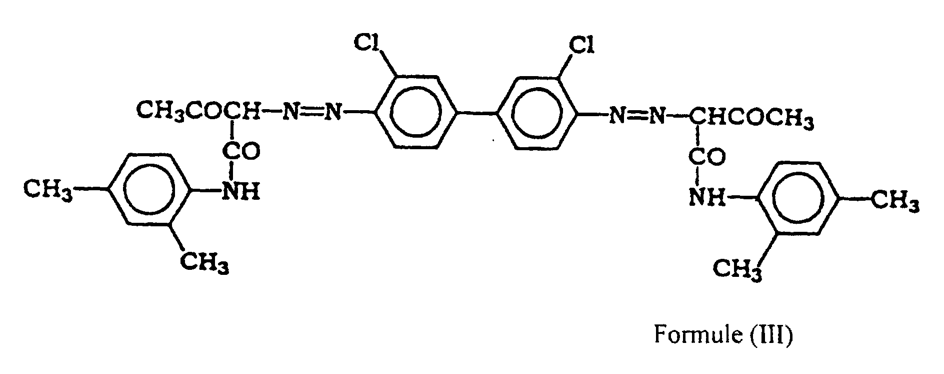

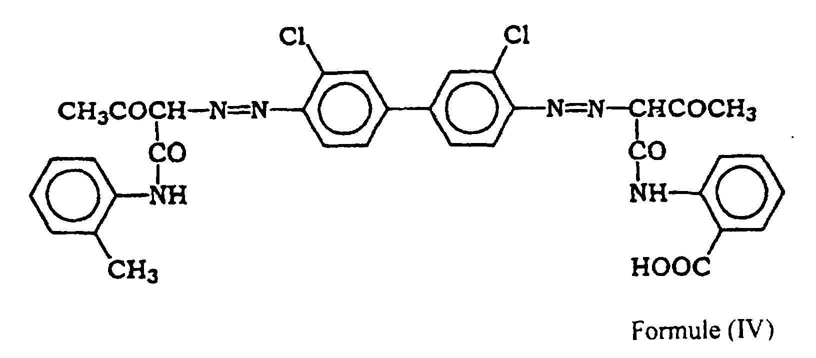

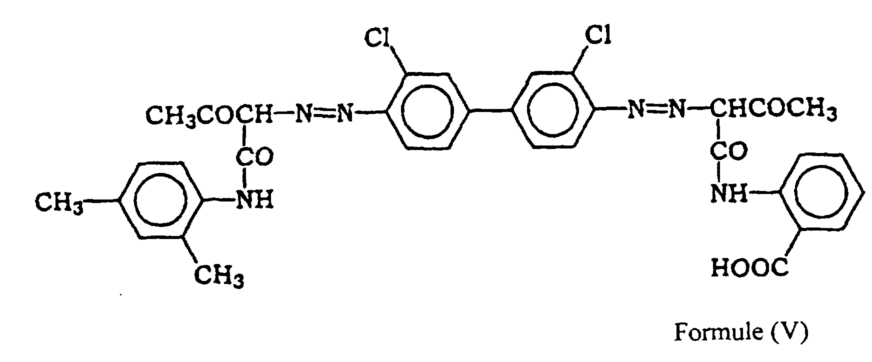

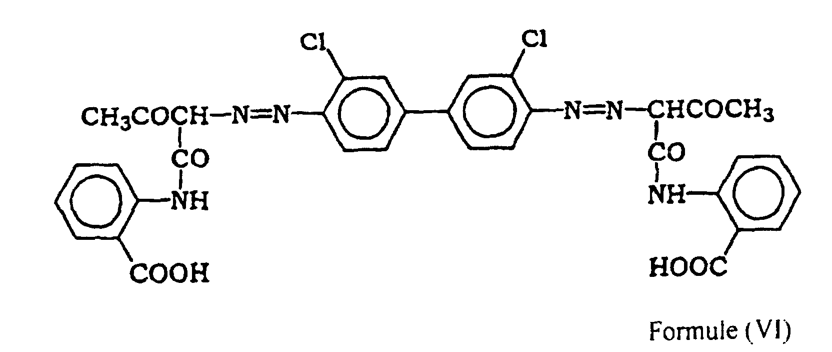

3. Additif pour un pigment diazoïque selon la revendication 1 et la revendication 2, dans lequel est contenue une plus grande quantité du composé diazoïque représenté par la Formule (V) que dudit composé diazoïque représenté par la Formule (IV).

4. Additif pour un pigment diazoïque contenant six types de composés diazoïques, qui est formé par la réaction de m-xylidide de l'acide acétoacétique, d'o-toluidide de l'acide acétoacétique et d'acide 2-acétoacétylaminobenzoïque en tant que composants de copulation, avec un composé tétrazoïque de la 3,3'-dichlorobenzidine en tant que composant tétrazoïque.

5. Additif pour un pigment diazoïque selon la revendication 4, dans lequèl le rapport molaire desdits composants de copulation correspondant à 39 à 47 % molaire de m-xylidide de l'acide acétoacétique, à 11 à 19 % molaire d'o-toluidide de l'acide acétoacétique et à 38 à 46 % molaire d'acide 2-acétoacétylaminobenzoïque.

6. Additif pour un pigment diazoïque selon l'une quelconque des revendications 1, 2, 3, 4 et 5 dans lequel ledit additif n'est pas traité avec de la rosine.

7. Additif pour un pigment diazoïque selon l'une quelconque des revendications 1, 2, 3, 4, 5 et 6, et pigment diazoïque.

8. Composition pigmentaire diazoïque comprenant un additif selon l'une quelconque des revendications 1, 2, 3, 4, 5 et 6, et un pigment diazoïque traité à la rosine.

9. Composition pigmentaire diazoïque selon la revendication 7 ou la revendication 8, dans laquelle ledit pigment diazoïque est au moins un pigment diazoïque choisi au sein du groupe comprenant le Pigment Jaune C.I. 13, le Pigment Jaune C.I. 14 et un composé diazoïque représenté par la Formule (I).
